(19) Europäisches Patentamt
European Patent Office
Office européen des brevets

(11) Veröffentlichungsnummer: **0 031 066**
**A1**

(12) # EUROPÄISCHE PATENTANMELDUNG

(21) Anmeldenummer: **80107728.0**

(22) Anmeldetag: **08.12.80**

(51) Int. Cl.³: **C 01 G 43/01**

(30) Priorität: **20.12.79 DE 2951451**

(43) Veröffentlichungstag der Anmeldung:
**01.07.81 Patentblatt 81/26**

(84) Benannte Vertragsstaaten:
**AT BE CH DE FR GB IT LI SE**

(71) Anmelder: **ALKEM GMBH**
**Postfach 110069**
**D-6450 Hanau 11(DE)**

(72) Erfinder: **Goenrich, Horst**
**Lessingstrasse 22a**
**D-6466 Gründau 2(DE)**

(72) Erfinder: **Druckenbrodt, Wolf-Günther, Dr.**
**Buchenweg 1a**
**D-6458 Rodenbach 1(DE)**

(74) Vertreter: **Mehl, Ernst, Dipl.-Ing. et al,**
**Postfach 22 01 76**
**D-8000 München 22(DE)**

(54) **Verfahren zur Erzeugung von Kernbrennstoffoxiden.**

(57) Die Ofenabgase des Kalzinationsprozesses beim AUC- bzw. AU/PuC-Verfahren (Herstellung von Kernbrennstoffdioxiden) werden im Kreislauf wieder in den Ofen zurückgeführt. Das entstehende $NH_3$ ersetzt bei dieser Prozeßführung den sonst für die Reduktion benötigten Wasserstoff.

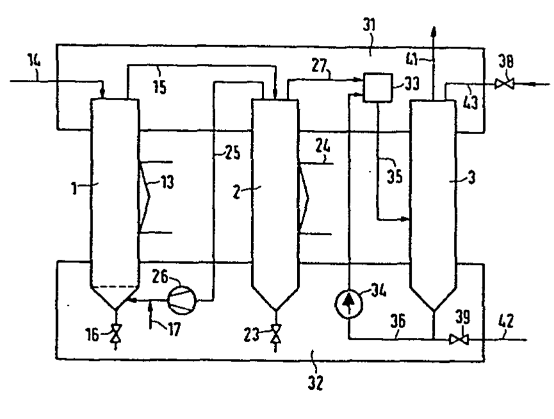


EP 0 031 066 A1

Croydon Printing Company Ltd.

ALKEM GmbH
Hanau

Mein Zeichen
VPA 79 P 8530 EUR

# Verfahren zur Erzeugung von Kernbrennstoffoxiden

Die vorliegende Erfindung betrifft ein Verfahren zur Durchführung des Kalzinations- und Reduktionsprozesses bei der Erzeugung von Kernbrennstoffoxiden, wobei AUC- bzw. AU/PuC in einer Wasserdampf/Ammoniakatmosphäre unter Temperatureinwirkung zersetzt werden.

Nach dem Stand der Technik, siehe die deutsche Patentschrift 1 592 478, wird der AUC- bzw. AU/PuC-Filterkuchen in einem Ofen, z.B. einen Durchstoß- oder Wirbelschichtofen in einer Wasserstoff/Wasserdampfatmosphäre zersetzt. Wasserstoff und Wasserdampf müssen dem Prozeß ständig neu zugeführt werden. Die Ofenabgase werden dann über einen Gaswäscher geleitet, in welchem der Wasserdampf kondensiert und die restlichen Abgase gereinigt werden. Der überschüssige Wasserstoff wird abgegeben.

Mü 2 Ant / 5.12.1979

Aus dieser kurzen Beschreibung des üblichen Verfahrens geht hervor, daß ständig gasförmige Betriebsmittel und Hilfsstoffe zugeführt bzw. abgeführt werden müssen. Es stellte sich daher die Aufgabe, dieses Verfahren rationeller zu gestalten und dabei Hilfsstoffe sowie Energie einzusparen.

Diese Aufgabe wird erfindungsgemäß dadurch gelöst, daß das feuchte Ausgangsmaterial AUC- bzw. AU/PuC zunächst in einem Ofen erhitzt wird, die dabei sich bildenden Gase Ammoniak, $CO_2$ und Wasserdampf zunächst in einen auf geregelter Temperatur gehaltenen Zwischenbehälter geführt werden und von dort im Kreislauf wenigstens teilweise wieder in den Ofen bzw. in einen Gaswäscher geleitet werden, wobei die sich dort bildende Ammoniumcarbonatlösung als Waschwasser wieder in den Prozeß zurückgeführt wird.

Zur näheren Veranschaulichung dieses Verfahrens wird auf das in der Figur schematisch dargestellte Fließschema verwiesen und dieses anhand eines Beispieles näher erläutert. Für die Durchführung des AUC/PuC-Verfahrens wird dazu ein Wirbelschichtofen 1 verwendet. Dieser wird bei ca. 600°C betrieben. Über die Leitung 14 wird der umzusetzende AUC/PuC-Filterkuchen portionsweise eingegeben und die Leitung 17 zunächst aus einem nicht dargestellten Gasvorratsbehälter Stickstoff von unten in den Ofen als Wirbelgas eingeblasen.

In der Wirbelschicht wird das Ammonium-Uranyl-Plutonylcarbonat zersetzt und durch Ammoniak zum $U/PuO_2$-Pulver reduziert:

$$(NH_4)_4 \left[(U/Pu)O_2 \ (CO_3)_3\right] \times n \ H_2O \longrightarrow U/PuO_2 + 3 \ CO_2 + 3 \ NH_3 + (3 + n) \ H_2O + 1/2 \ N_2 + 1/2 \ H_2$$

Diese chemische Reaktionsgleichung stellt eine Summengleichung für die in Teilschritten ablaufende Reaktion dar. Um eine quantitative Reduktion zum $U/PuO_2$ zu garantieren, muß in der Ofenatmosphäre immer ein Überschuß an Ammoniak oder Wasserstoff vorhanden sein. Nachdem diese Reaktion zunächst eingeleitet worden ist, werden die bei der Zersetzung entstehenden Gase Ammoniak, Kohlendioxid, Wasserdampf, Wasserstoff und Stickstoff über eine wärmeisolierte Leitung 15 in einen Zwischenbehälter 2 geleitet. An diesen ist über die Leitung 27 ein Absorptionsgaswäscher 3 angeschlossen, über den die überschüssigen Gasmengen abgeführt werden (Leitung 41). Für den Waschvorgang wird das über die Leitung 27 zugeführte Gasgemisch in einen Düsenkasten 33 mit Wasser aus dem Behälter 3, das über die Leitung 36 sowie die Pumpe 34 zugeführt wird, gemischt und über die Leitung 35 in den Behälter 3 eingespeist. Durch die dabei stattfindende Gasabsorption wird ein Unterdruck erzeugt, der sich dem ganzen System mitteilt. Da die großen Anlagenteile 1, 2 und 3 mit ihren Kopf- und Fußseiten in Handschuhkästen 31 und 32 hineinragen, ist damit sichergestellt, daß der bei Handschuhkästen notwendige

Unterdruck bei einer Undichtigkeit in der Apparatur nicht gestört werden kann.

Vom Zwischenbehälter 2 aus wird nach der Anlaufphase des Prozesses ein großer Teil der aus dem Ofen kommenden Abgase über die Leitung 25 und die Pumpe 26 als Wirbelgas anstelle des Stickstoffes aus der Leitung 17 in den Wirbelschichtofen 1 eingeführt. Der in diesen Abgasen enthaltende Ammoniak und Wasserstoff führen dabei zu einer vollständigen Reduktion des Pulvers im Ofen 1. Durch die in den Wirbelgasen bereits enthaltene Energie wird der Energieverbrauch des Ofens, der zunächst auf etwa 600°C über die Heizung 13 aufgeheizt worden war, gesenkt. Durch eine Temperaturregelung 24 am Zwischenbehälter kann der im Wirbelschichtofen ablaufende Prozeß so gesteuert werden, daß der Wasserdampf entweder auskondensiert oder mit den übrigen Gasen als Wirbelgas in den Ofen zurückgeführt wird. Dies ist für die gewünschte Pulverqualität von besonderer Wichtigkeit. Nach Beendigung der Reduktionsphase für das gesamte Pulver wird der Ofen 1 mit Stickstoff aus der Leitung 17 gespült und anschließend das Pulver zur Weiterverarbeitung über das Ventil 16 abgelassen. Der als Spülgas verwendete Stickstoff wird über die Leitung 41 aus dem Abgaswäscher 3 wieder abgezogen und kann erneut Verwendung finden.

Das im Abgaswäscher 3 befindliche Wasser reichert sich im Laufe der Zeit zu einer gesättigten Ammoniumcarbonatlösung an. Diese wird über das Ventil 39 und die Leitung 42 abgezogen und kann im Konversionsprozeß des AUC bzw. AU/PuC-Verfahrens zum Waschen des Filterkuchens genutzt werden.

Nach dem Austragen des $U/PuO_2$-Pulvers über das Ventil 16 wird dieses wieder geschlossen und erneut AU/PuC über die Leitung 14 eingegeben und der Oxidationsprozeß, wie beschrieben, wieder in Gang gesetzt.

Abschließend seien die Vorteile des neuen Verfahrens nochmals kurz zusammengestellt:

1. Der Einsatz von besonders zugeführtem Wasserstoff bei der Reduktion von AUC oder AU/PuC entfällt.

2. Der Wasserdampf muß nicht von außen über Dampferzeuger in das System eingebracht werden.

3. Der Energieinhalt der Ofenabgase wird in den Prozeß zurückgeführt.

4. Die Kapazität der Gaswäscher für die Ofenabgase kann herabgesetzt werden, da diese zum großen Teil in den Prozeß zurückgeführt werden.

5. Im gesamten System kann kein Überdruck entstehen.

6. Die Kosten für Energie- und Hilfsstoffe werden gegenüber dem Stand der Technik erheblich gesenkt.

3 Patentansprüche
1 Figur

Patentansprüche

1. Verfahren zur Durchführung des Kalzinations- und Reduktionsprozesses bei der Erzeugung von Kernbrennstoffoxiden, wobei AUC- bzw. AU/PuC in einer Wasserdampf/Ammoniakatmosphäre unter Temperatureinwirkung zersetzt wird, d a d u r c h g e k e n n z e i c h n e t , daß das Ausgangsmaterial AUC- bzw. AU/PuC zunächst in einen Ofen (1) erhitzt wird, die dabei sich bildenden Gase Ammoniak, Kohlendioxid und Wasserdampf in einen auf geregelter Temperatur gehaltenen Zwischenbehälter (2) geführt werden und von dort im Kreislauf teilweise wieder in den Ofen (1) bzw. in einen Gaswäscher (3) geleitet werden, wobei die sich dort bildende Ammoniumcarbonatlösung als Waschwasser wieder in den Prozeß zurückgeführt wird.

2. Verfahren nach Anspruch 1, d a d u r c h g e k e n n z e i c h n e t , daß ein Wirbelschichtofen (1) verwendet wird und die zurückgeführten Gase neben ihrer chemischen Wirkung als Wirbelgase für die mechanische Auflockerung des Ofeninhaltes dienen.

3. Einrichtung zur Durchführung des Verfahrens nach den Ansprüchen 1 und 2, d a d u r c h g e k e n n z e i c h n e t , daß der Ofen (1) sowie der Zwischenbehälter (2) durch die Wirkung eines Gaswäschers (3) auf einem leichten Unterdruck gehalten sind und abgedichtet mit ihren Anschlußseiten in Handschuhkästen (31 und 32) hineinragen.

0031066

1/1 79 P 8530

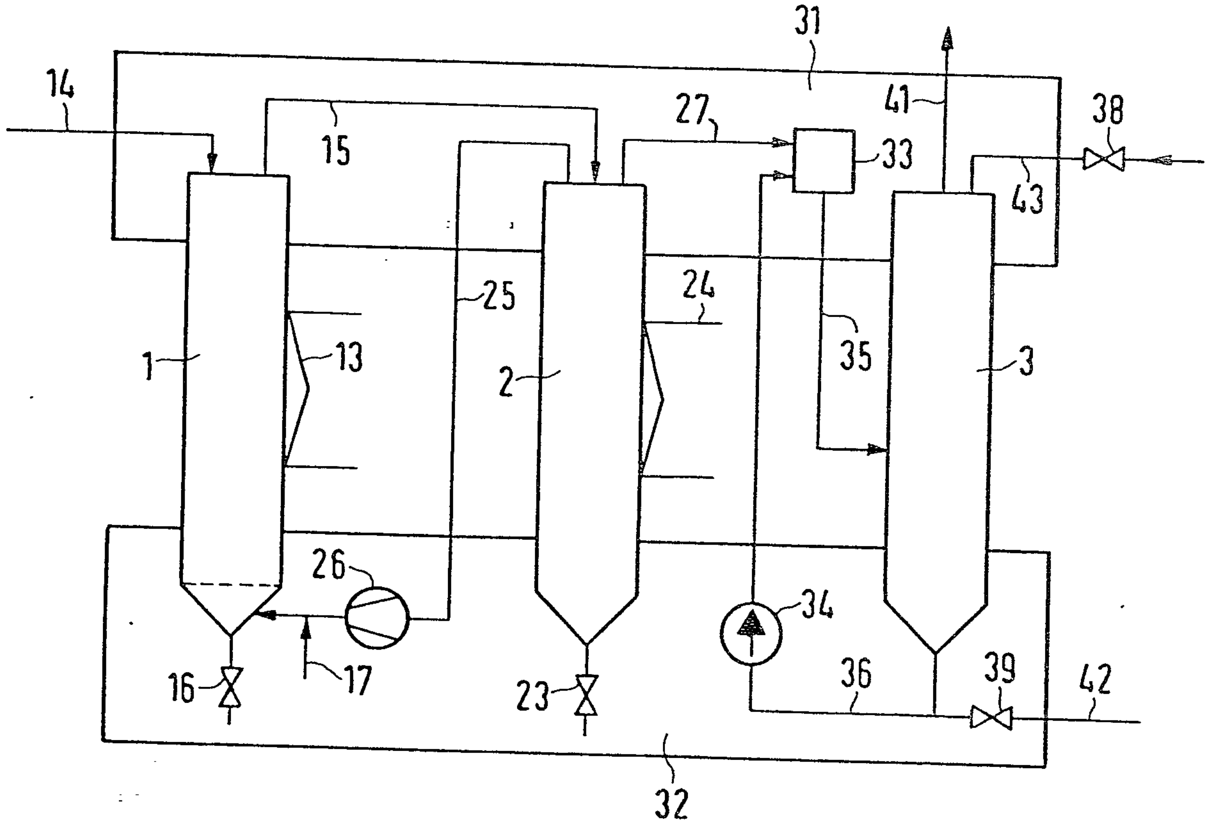

Europäisches Patentamt

# EUROPÄISCHER RECHERCHENBERICHT

Nummer der Anmeldung
EP 80 10 7728.0

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 724 710 (REAKTOR-BRENNELEMENT UNION)<br>* Ansprüche 1, 3, 4 *<br>-- | 1,2 | C 01 G 43/01 |
| D | DE - C - 1 592 478 ( NUKEM)<br>-- | | |
| A | DE - A - 2 033 433 (WESTINGHOUSE ELECTRIC)<br>* Seite 6, Absatz 2 *<br>-- | | RECHERCHIERTE SACHGEBIETE (Int. Cl.³) |
| A | DE - C - 1 094 250 (MALLINCKRODT CHEMICAL WORKS)<br>---- | | C 01 G 43/00<br>G 21 C 3/42 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Berlin | 25-03-1981 | KESTEN |